# EUROPEAN PATENT SPECIFICATION

(11) **EP 1 337 824 B1**
(45) Date of publication and mention of the grant of the patent: **24.04.2013**
(21) Application number: 01947020.2
(22) Date of filing: 02.07.2001
(51) Int. Cl.: G01M 3/32, G01M 3/26, G01N 19/08, G01N 7/10

(54) **METHOD AND APPARATUS FOR MONITORING THE INTEGRITY OF COMPONENTS AND STRUCTURES**
VERFAHREN UND VORRICHTUNG ZUR ÜBERWACHUNG DER INTEGRITÄT VON KOMPONENTEN UND STRUKTUREN
PROCEDE ET APPAREIL PERMETTANT DE CONTROLER L'INTEGRITE DE CONSTITUANTS ET DE STRUCTURES

(30) Priority: 08.09.2000 AU PR001800
(43) Date of publication of application: 27.08.2003
(73) Proprietor: Structural Monitoring Systems Ltd, West Perth, Western Australia 6005 (AU)
(72) Inventor: DAVEY, Kenneth, John, Bassendean, Western Australia 6054 (AU)
(74) Representative: Pfenning, Meinig & Partner GbR
(86) International application number: PCT/AU2001/000739
(87) International publication number: WO 2002/021096

(56) References cited:
- WO-A-94/27130
- US-A- 4 145 915
- US-A- 4 776 206
- US-A- 4 979 390
- US-A- 5 078 005

## Description

### Field of the Invention

The present invention is for a method and apparatus for monitoring the integrity of a component or structure, in particular, though not exclusively by monitoring a pressure state that can be maintained within cavities either inherently provided or specifically formed in the component or structure.

### Background of the Invention

The present invention has its genesis from consideration of the problems faced by aircraft designers in monitoring the integrity of: sandwiched structures typically encountered around splices and cut-outs in fuselages; and, substantially hollow components as encountered in composite structures such as flaps, doors, panels and the like; and, attempting to prevent the ingress of moisture into such structures and components. These structures and components are difficult to examine for the detection of cracking, corrosion and disbonding. Further they are prone to the ingress of moisture arising for various reasons including:
capillary action and the substantially hollow nature of the structures, particularly those made from composite materials;
exposure to temperature extremes;
exposure to large ambient pressure variations;
exposure to environments of high humidity and precipitation.

Apart from corrosion in metallic structure, the ingress of moisture can lead to serious structural flaws such as disbonding due to progressive damage caused by the cyclic intrusion of the moisture followed by expansion as it freezes.

Of course the above problem are not the exclusive domain of aircraft designers. Structural integrity monitoring has very wide application and can be used, for example, to monitor the adhesive bonds such as between anechoic tiles on a submarine or heat resistant tiles on a spacecraft.

US-A-4 145 915 discloses a method of detecting cracks in a non-permeable structure. This involves forming a cavity in a structure, pressurising the cavity, and monitoring the internal pressure in the cavity. A crack in the structure that penetrates the cavity allows for the passage of fluid between the environment and the cavity and is thus detected by a pressure sensor.

US-A-4 776 206 discloses a method for leak testing a cavity. The method involves measuring a flow rate of a pressurised gas flowing into a cavity, The measured flow rate is compared with a threshold level based on a gas flow signature for the cavity. If the measured gas flow exceeds the threshold level a leak signal is produced indicative of the existence of a leak.

US-A-5 078 005 discloses a method and apparatus for checking the bonding of a cellular structure to a support. This is achieved by: applying a detector to opposite ends of cells in the structure, the detector comprising first and second compartments which are separated by a partition; supplying compressed air to a first compartment; and measuring the flow of air out of the second compartment by means of a flow meter connected to an outlet from the second compartment. The flow meter measurement enables one to determine whether or not there are any non bonded areas between the cellular structure and the support in the region of the detector.

### Summary of the Invention

It is an object of the present invention to provide a method and apparatus for monitoring the integrity of a component or structure. It is a further object to prevent the ingress of moisture into the said component or structure.

For ease of description from hereinafter, including the claims, the term "structure" is used as a reference to a structure or component.

According to a first aspect of the present invention there is provided a method of monitoring the integrity of a permeable structure disposed in an environment containing a fluid at an ambient pressure, and where at least one cavity is provided, on or in the structure, wherein a source of a first fluid at a first pressure greater than said ambient pressure in fluid communication with the at least one cavity is provided, the method being characterized by connecting a high fluid flow impedance in series between said at least one cavity and said source to provide a minuscule inflow of fluid to said at least one cavity and through and from the permeable structure, allowing the minuscule inflow to reach a steady state rate; and monitoring for a change in the steady state rate of said minuscule inflow of said first fluid into said at least one cavity.

Preferably, the said first fluid pressure is substantially constant with respect to sad ambient pressure.

In one embodiment, said monitoring step comprises monitoring for a change in steady state differential pressure between said at least one cavity and said source.

Preferably, said step of providing said first fluid source at said first pressure comprises setting said first pressure at a level which is sufficiently greater than said ambient pressure to overcome hygroscopic force and capillary action, but not sufficient to be detrimental to the integrity of said structure.

Preferably, said step of providing said source of first fluid comprises providing a source of a first gas.

Preferably, said step of providing said first gas comprises providing a moisture trap between said source and said at least one cavity to dry said gas prior to flowing into said at least one cavity.

Preferably, when said structure includes two or more internal cavities, said placing step includes one or both of (a) placing said cavities in fluid communication with each other; and (b) placing said cavities in fluid communication with said source.

In an alternate embodiment, said monitoring step includes:
providing a supply of a fluid marker in fluid communication with said source; and
monitoring said structure for traces of said fluid marker.

Preferably said fluid marker comprises a dye indicating liquid or gas.

In a further alternate embodiment said step of monitoring for a change in steady state inflow includes:
providing a supply of a detectable gas in fluid communication with said source;
providing a detecting means for said gas; and monitoring for a change in a steady state rate of seepage of said gas from said structure.

According to a further aspect of the present invention there is provided an apparatus for monitoring the integrity of a permeable structure disposed in an environment containing a fluid at an ambient pressure, and wherein at least one cavity is provided on or in the structure, the apparatus comprising a source of a first fluid at a first pressure greater than said ambient pressure, and a communication channel for providing fluid communication between said source and said at least one cavity, characterized in that said channel includes a high fluid flow impedance connected in series between said at least one cavity and said source to provide a minuscule inflow of fluid to said at least one cavity and through the permeable structure to produce a steady state rate of inflow of the fluid into the at least one cavity, and monitoring means are provided for monitoring for a change in the steady state rate of said minuscule inflow of said first fluid through said channel into said at least one cavity.

In one embodiment, said monitoring means comprises a transducer coupled across said high fluid flow impedance for monitoring for a change in steady state differential pressure between said at least one cavity and said source.

Preferably said first pressure is sufficiently greater than said ambient pressure to overcome hygroscopic force and capillary action but not sufficient to be detrimental to the integrity of said structure.

Preferably said first fluid is a gas.

Preferably said apparatus further comprises a moisture trap located between said source and said at least one cavity to dry said gas prior to flowing into said at least one cavity.

In an alternate embodiment, said monitoring means comprises a fluid marker in communication with said source for marking said structure at locations where said fluid permeates from said cavity through said structure to said environment.

### Brief Description of the Drawings

- Figure 1: is a schematic representation of a first embodiment of the present invention;
- Figures 2: is a schematic representation of an apparatus in accordance with a further embodiment of the present invention for monitoring the pressure state of cavities within a structure and hence the integrity of the structure;
- Figure 3: is a schematic representation of a further embodiment of the present invention;
- Figure 4a: is a schematic representation of a further embodiment of the present invention;
- Figure 4b: is a schematic representation of a further embodiment of the present invention;
- Figure 5a: is a schematic representation of a two-layer sandwich structure to which an embodiment of the present invention is applied;
- Figure 5b: is a variation of the configuration of the embodiment of Figure 5a;
- Figure 6: is a schematic representation of a three-layer sandwich structure to which an embodiment of the present invention is applied;
- Figure 6a: is a variation of the configuration of the embodiment of Figure 6;
- Figure 6b: is a further variation of the configuration of the embodiment of Figure 6;
- Figure 7: is a schematic representation of a four-layer sandwich structure to which an embodiment of the invention is applied;
- Figure 8a: is a schematic representation of a three-layer sandwich structure to which an embodiment of the present invention is applied;
- Figure 8b: is a schematic representation of a three-layer sandwich structure to which a further embodiment of the present invention is applied; and,
- Figure 9: shows a partly sectioned oblique view of a further cavity arrangement.

### Detailed Description of the Preferred Embodiments

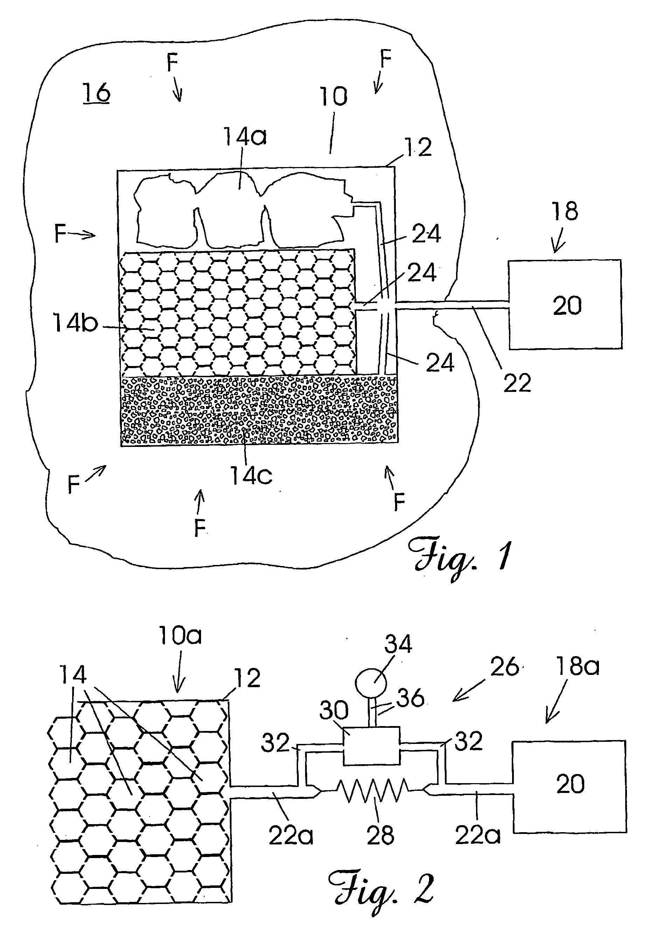

Figure 1 illustrates schematically, one embodiment of a method and apparatus of the present invention for preventing the ingress of a fluid F into a structure 10. The structure 10 is a fictitious structure made up from three types of composite structure and is provided merely for the purpose of illustrating the principles of embodiments of the invention. The structure 10 has an outer skin 12 and a plurality of internal cavities 14a, 14b and 14c (hereinafter referred to in general as "cavities 14"). The actual geometry of the cavities 14 is a function of the type of structure 10. Cavities 14a are illustrative of a structure 10 having internal cavities of a random configuration; cavities 14b are illustrative of a structure 10 having a honeycomb or cellular-type core; and cavities 14c are illustrative of a structure 10 having a foam core.

The structure 10 is disposed in an environment 16 containing fluid F at an ambient pressure that acts on the structure 10. For example, the environment 16 may be the atmosphere at 4000 metres above sea level, where the fluid F is air; or the environment 16 may be the ocean at depth of 100 metres in which case the fluid F is sea water.

Apparatus 18 in accordance with an embodiment of the present invention acts to prevent or at least minimise the ingress of the fluid F into the structure 10. The apparatus 18 includes a pressure source 20 for providing a first fluid such as, air or an inert gas at a pressure higher than the pressure of the fluid F. A communication channel in the form of a conduit 22 provides fluid communication between the source 20 and one or more of the internal cavities 14 of the structure 10. If it is the case that the cavities 14 of structure 10 are all directly or indirectly in fluid communication with each other, then in order for the gas of source 20 to be in fluid communication with the cavities 14, the conduit 22 need only extend into the structure 10 to a point where it pierces the skin 12. Further, although not illustrated, a plurality of conduits 22 can be provided between the source 20 and the structure 10. However, if the cavities 14 are not in mutual fluid communication with each other or are arranged in sealed layers or groups, the communication path of apparatus 18 can include one or more galleries or conduits 24 contained within the skin 12 that communicate with the conduit 22 thereby providing fluid communication between the gas of the source 20 and the cavities 14. Alternately small perforations can be made between the internal cavities 14 to allow fluid communication there between. This may for example be achieved using a laser.

The pressure of source 20 is arranged to be greater than the pressure of fluid F (which may be either a static pressure or a dynamic pressure) so as to prevent the ingress of fluid F into the cavities 14. More particularly, the pressure of source 20 is arranged to be sufficient to overcome hygroscopic force and capillary action to prevent moisture ingress into the structure 10 but is not sufficient to be detrimental to the integrity of the structure 10.

It is to be recognised that if the skin 12 is absolutely impermeable to fluid F and such does not contain any faults or does not develop any faults throughout the life of the structure 10 then the fluid F of environment 16 cannot enter the structure 10. However, in practice, for a variety of reasons including the effects of material permeability, dynamic loading, localised impact damage, practical imperfections in the manufacture of structure 10, or the use of fasteners to fabricate the structure it is often the case that the skin 12 is, or in time becomes, permeable to the fluid F.

Figure 2 illustrates an apparatus 18a that allows for the monitoring of the pressure state of cavities 14 and hence the integrity of structure 10a., The apparatus 18a includes a fluid source 20 and a conduit 22a serving a similar function as conduit 22 in the embodiment depicted in Figure 1 and interconnecting a monitoring device 26 for monitoring the inflow of fluid from the source 20 into the cavities 14. The monitoring device 26 is based on that disclosed in International Application No. PCT/AU94/00325 (WO 94/27130), the contents of which is incorporated herein by way of reference. The substantive difference being that a constant (positive) pressure source is employed in embodiments of the present invention, whereas in International Application No. PCT/AU94/00325 (WO 94/27130) a constant vacuum source is employed. The monitoring device 26 monitors for a change in the steady state rate of inflow of fluid from the source 20 into the cavities 14. In this embodiment the monitoring device 26 includes a high fluid flow impedance 28 disposed in series in the conduit 22a between the source 20 and the cavities 14. The high fluid flow impedance 28 preferably comprises a very long length of small bore duct which allows a minuscule flow of fluid. Alternatively, the high fluid flow impedance 28 could comprise a permeable material such as sintered glass.

To gain an appreciation of the flow rates through the PCT/AU94/00325 (WO 94/27130) device, the maximum rate of flow is at the minimum that can be detected by current digital flow meters. As an example, a duct having a bore of less than 0.3mm and a length in excess of 3 metres and experiencing an air pressure drop of 20kPa across its length would have a flow of approximately 2-3 micro litres/minute. Bearing in mind that sensitivity of the device increases at an exponential rate as zero is approached and, if desired the magnitude of the high fluid flow impedance can be extended towards infinity, extremely small flow rates can be detected.

Generally, the magnitude of the high fluid flow impedance should be sufficiently high as to produce significant pressure drop across the high impedance in response to minuscule flow through the high impedance.

Measuring means in the form of a differential pressure transducer 30 is coupled across the impedance 28. The transducer 30 is coupled across the impedance 28 by fluid connecting ducts 32, and coupled to an amplifier and display 34 by electrical conductors 36. Alternatively, the differential pressure transducer 30 coupled across the impedance 28 may be in the form of a non-electrical indicator where electrical circuitry is not desirable.

Assuming that the skin 12 of the structure 10a has some degree of inherent permeability, after initial start up of the apparatus 18a, there will be a characteristic steady state rate of seepage of fluid through and from the structure 10a. If there is a change in the permeability of the skin 12/structure 10a, there will be a corresponding increase in the rate of inflow of the fluid from the source 20 into the structure 10a. This will be monitored and detected by the monitoring device 26. A typical application of this embodiment could be an aircraft door, flap, aileron, and the like supplied with nitrogen at a pressure above ambient.

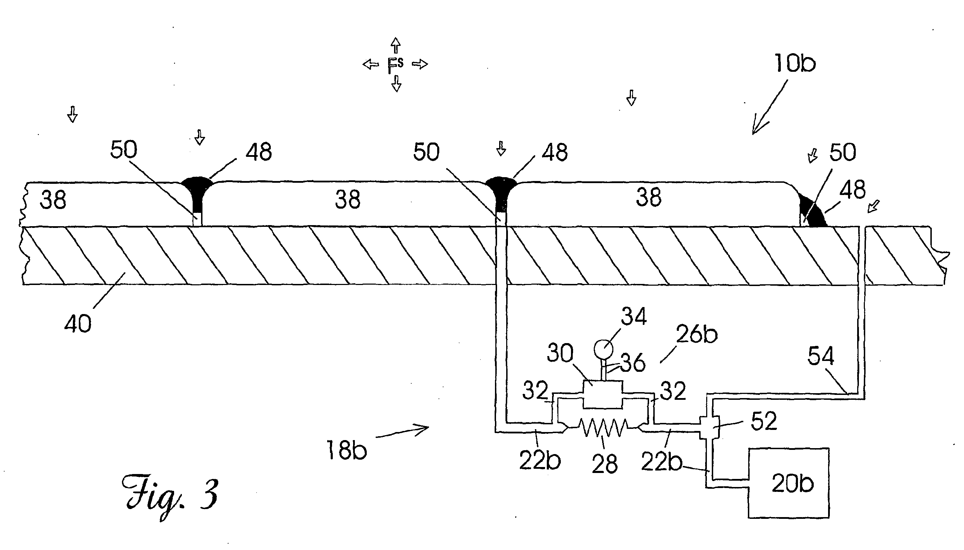

Figure 3 depicts an embodiment of the present apparatus and method when applied to a structure 10b comprising anechoic tiles 38 adhered to the hull 40 of a submarine.

A fillet of elastomeric grout 48 is deposited about the periphery of each tile in a manner so that cavities 50 are created underneath the grout 48 between adjacent tiles 38 or, under grout 48 between the edge of a tile 38 and the adjacent surface of the hull 40. The cavities 50 are coupled to a monitoring apparatus 18b. The apparatus 18b is similar to the apparatus 18a depicted in Figure 2 and encloses a monitoring device 26b which includes conduit 22b that provides a fluid communication path between the cavities 50 and a fluid source 20b (in this example a gas source) via a series connected high fluid flow impedance 28. Differential pressure transducer 30 is coupled across the impedance 28 via ducts 32. An amplifier and display 34 coupled to the transducer 30 via electrical conductors 36 provides a display of steady state pressure differential across the impedance 28. The fluid from supply 20 is metered through a pressure regulator 52 which is disposed in the conduit 22b between the impedance 28 and the source 20. The regulator 52 is also pressure referenced to the surrounding atmosphere, in this case sea water, herein shown with the notation F^{s} and associated white pressure indicating arrow heads, via a duct 54. The regulator 52 maintains the pressure of the gas from source 20 at a substantially constant level above the water pressure. As ambient water pressure varies with depth the system 18b, and in particular the regulator 52, is able to dynamically vary the pressure of the gas from source 20 delivered to the cavities 50. In operation, the monitoring device 26b stabilizes with a relatively constant pressure differential across the high impedance irrespective of the ambient water pressure.

The integrity monitoring of the adhesive bonding of the tiles 38 is facilitated by monitoring the differential pressure across the high impedance 28 for any increase resulting from minuscule air seepage from any of the cavities 50 giving ample warning of any disbond of a tile 38 or damage to the grout 48. The imminence of disbonding and water ingress would be immediately obvious due to a rise in pressure differential across the impedance 28 and detected by the transducer 30. Loss of a tile 38 would result in a dramatic rise in differential pressure. The monitoring device 26b can also be provided with an adjustable bypass of the impedance 28 to allow high rates of flow of air from the source 20 to allow for some damage tolerance and maintain positive pressure protection for the cavities 50.

As ambient pressure of the sea water F^{s} surrounding the hull 40 of the submarine would vary significantly from the top of the conning tower fin to the belly of the hull, it may be necessary to group the tiles 38 into several vertically tiered layers which are monitored separately to ensure that the pressure of the gas supplied to a particular group of tiles remains only slightly above the ambient pressure acting on those tiles thereby preventing excess positive pressure in upper groups of tiles. This can be achieved by providing a manifold in the portion of conduit 22b between the source 20 and regulator 52 and having a plurality of regulators 52 each feeding from the manifold and coupled to identical arrangements of high fluid flow impedance 28, transducer 30, and ambient pressure reference 54.

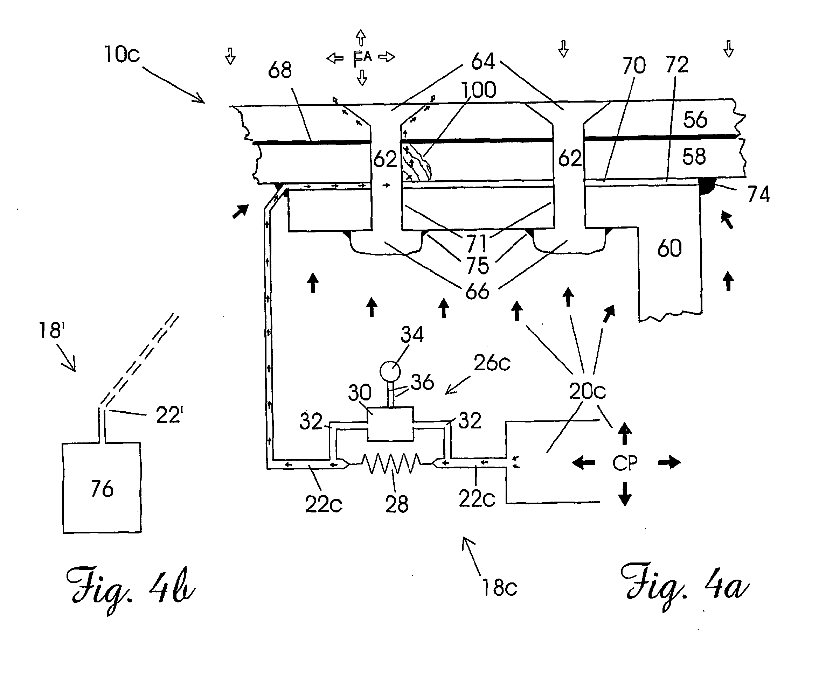

Figure 4a illustrates a further embodiment of the present invention applied to a structure 10c comprising three components 56, 58 and 60 which are coupled in a sandwich construction. More particularly, the structure 10c is part of a pressurized fuselage of an aircraft. The components 56, 58 and 60 are fastened together by rivets 62 which pass through holes 71 formed in the components 56,58 and 60. Each rivet 62 has a head 64 that sits flush with the component 56 and a flattened tail 66 at an opposite end that sits on the component 60. Flush head rivets are shown as an example but round head rivets and possibly bolt fasteners could be substituted.

Sandwich components generally have a layer of a sealant material between each fastened layer partly to prevent corrosion and fretting. To facilitate the provision of a cavity, this arrangement is modified in the present embodiment such that a sealant layer 68 is provided between components 56 and 58 only, with the sealant that would ordinarily exist between components 58 and 60 at least partially removed leaving a gas permeable gap 70 there between. In accordance with the present embodiment the gap 70 can be formed into a cavity 72 by providing a perimeter seal 74 about the perimeter of gap 70. Sealant 75 should also be employed sparingly around the flattened end 66 of rivets 62 and adjacent surface of component 60. Apparatus 18c, enclosing monitoring device 26c is connected to the cavity 72 for monitoring the integrity of the structure 10c. The monitoring device 26c includes a conduit 22c leading to a parallel connection of high fluid flow impedance 28 and pressure transducer 30. The transducer 30 is coupled to an amplifier and display 34 via electrical conductors 36. Alternatively, the differential pressure transducer 30 coupled across the impedance 28 may be in the form of a non-electrical indicator where electrical circuitry is not desirable.

The pressure source 20c of this embodiment is cabin pressure of the aircraft which feeds into both the impedance 28 and the transducer 30. The cabin pressure is marked as "CP" and has associated pressure indicating black arrow heads.

If a crack 100 was to form in the intermediate component 58 about the rivet 62, a fluid seepage flow path (indicated by small black flow indicating arrow heads) can be created around the rivet 62 and head 64 to the outside high altitude atmosphere F^{A}, associated with white pressure indicating arrow heads, due to the crack 100 and subsequent loosening of the fastening. The resulting increase of the inflow of air into cavity 72 through the impedance 28 will be detected by the transducer 30 as a change in differential pressure thus providing an indication of the crack 100 in component 58.

In an alternate embodiment depicted in Figure 4b, the apparatus 18' for monitoring the integrity of structure 10c comprises a compliant container 76 of a fluid marker such as a liquid or gaseous dye, or detectable gas, which is coupled by conduit 22' vice conduit 22c to the cavity 72. As with the previously described embodiment, if a crack 100 were to develop in the component 58 that extends to the rivet 62, there will be a flow of marker from the container 76 through conduit 22', cavity 72, the crack 100 and around rivet 62 to seep to the outside atmosphere. This arises because the compliant container 76 is also subject to cabin pressure CP. The detection of dye or gas about the rivet 62 provides an indication of the crack in the component 58.

When the fluid marker is a liquid, detection can be by means of visual inspection of the structure. The appearance of the dye say around the head of a rivet 62 is potentially due to the existence of a crack.. When a detectable gas is used as the marker, such as helium, gas monitoring and detecting equipment is required to detect the escape of the gas from the structure. In the case where the structure has some inherent permeability, there will be of course a steady state flow of the gas through the structure in which case one is required to monitor for a change in the steady state condition. On the other hand, if the structure is after initial manufacture absolutely impermeable, then one is required to detect for any presence of the gas marker. This of course is the same as monitoring for the appearance of a significant pressure differential across the monitoring apparatus 26c indicating a flow where previously no flow existed. However, because of the sensitivity of the fluid impedance device 26c, the fluid marker method is more likely to be useful in a secondary roll as an indicator of the location of a flaw.

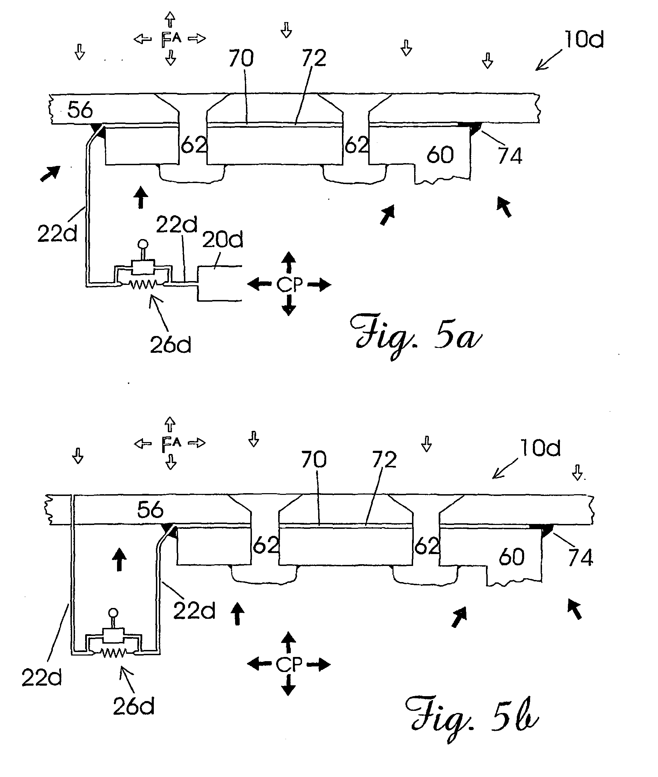

Figures 5-7 depict variations of "sandwich" structures to which embodiments of the present invention can be applied.

In Figure 5a, a portion of a structure 10d comprises two components 56 and 60 fastened together by rivets 62. A gas permeable gap 70 exists between mutually facing adjacent surfaces of components 56 and 60. A cavity 72 is formed by sealing the gap 70 with a perimeter seal 74. Similar to Figure 4a, the structure 10d is a portion of an aircraft fuselage containing cabin pressure CP and is disposed in an environment of a fluid F^{A} being ambient air pressure at high altitude. The integrity of the structure 10d can be monitored by connecting the cavity 72 via a conduit 22d to a monitoring apparatus 26d similar to 26c of Figure 4a of the type described herein above.

As the cavity 72 in the structure 10d is completely enveloped by the fluid F, any seepage of gas from the cavity 72 through component 56 will be to the outside environment F^{A}.

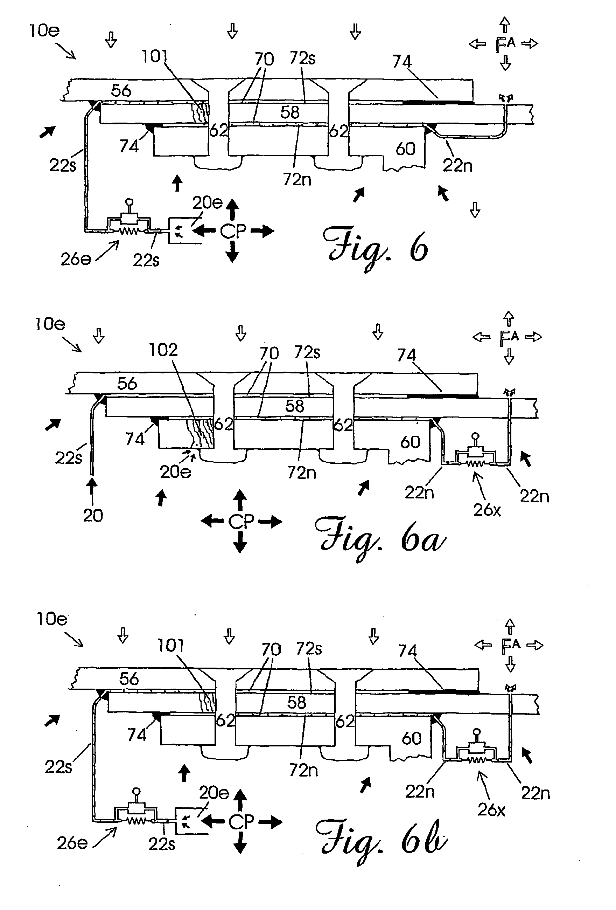

In a variation of the above arrangement of Figure 5a, shown in Figure 5b, the apparatus 26c could be connected between the cavity 72 and the outside atmospheric pressure F^{A}. In this example, cavity 72 becomes a conduit for pressure source in form of cabin pressure (CP) in the event of a through flaw developing in component 60. This arrangement is further discussed in Figures 6a and 6b following.

In Figure 6, the structure 10e is very similar to the structure 10c in Figure 4a. However the structure 10e is now formed with two cavities, 72s and 72n. The cavity 72s is formed between mutually adjacent faces of components 56 and 58 of the structure 10e. The cavity 72s is in fluid communication via conduit 22s with the pressure source 20e (CP) via monitoring apparatus 26e of like structure and function as described above . The cavity 72n however which exists between components 58 and 60 is placed in fluid communication with fluid pressure referenced to the outside environment F^{A}. This now allows for the detection of a crack 101 in the intermediate component 58 that extends between the cavities 72s and 72n other than directly to the outside environment F^{A} through component 56. A dotted trail shows the flow path from pressure source 20e, through duct 22s and device 26e, cavity 72s, crack 101 cavity 72n, duct 22n and thence to the outside atmospheric "environmental" pressure F^{A}.

As a further measure, cavity 72n could be communicated via duct 22n to a similar apparatus to 26e (26x) and thence to an atmospheric pressure reference F^{A}. This is shown in Figure 6a and the employment of monitoring apparatus 26x is basically the same arrangement as shown in Figure 5a. The purpose of this arrangement is to monitor the integrity of component 60. A crack or flaw 102 developing in component 60 communicating cabin pressure CP (source 20e) with cavity 72n would produce a pressure drop, due to seepage flow (small arrow heads and dots), across the fluid impedance of the apparatus 18x to the outside environmental F^{A}. If this feature was desired, the connection of apparatus 26x could be normally bypassed or carried out at intervals to prevent a continuous series connection of two monitoring devices 26e and 26x (as shown in Figure 6b) which would halve the sensitivity of both apparatus 26e and 26x in response to a flaw 101 occurring in component 58. Seepage flow from cavity 72s through a crack (101) in component 58, into cavity 72n, would have to pass through the two high fluid impedances in series of monitor 26e and 26x and the two associated differential pressure sensors would share the pressure drop resulting in halved sensitivity. The series flow problem is shown by small arrow heads and dots. Of course, if a crack developed in component 56 direct to the outside environmental F^{A}, no such problem would arise.

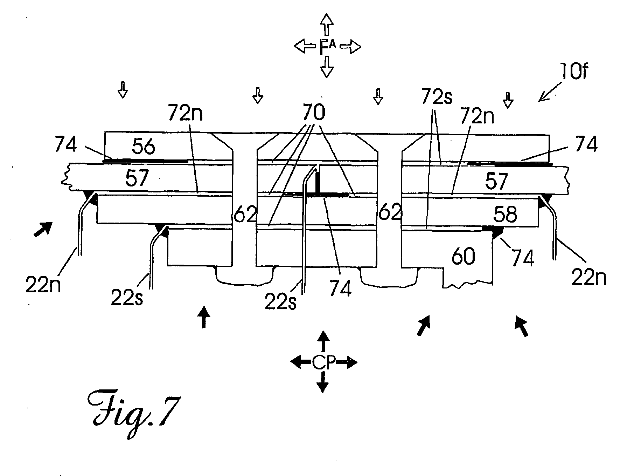

Figure 7 depicts a further sandwich structure 10f having four layers or sheets 56, 57, 58 and 60 connected together by rivets 62. Layer 57 comprises two abutted sheets. Structure 10f is once again a portion of an aircraft fuselage containing cabin pressure CP and is disposed in an environment of a fluid being ambient air pressure at high altitude. The method of monitoring the integrity of structure 10f includes forming cavities 72s that are in fluid communication, via conduits 22s, with the pressure source CP of a monitoring apparatus of the type described herein above typically 26c to 26x and forming cavities 72n that are in fluid communication via conduits 22n with the environmental ambient pressure F^{A}, with cavities 72n interspersed between cavities 72s. The arrangement for monitoring the integrity of component 60 of Figures 5a and 6a could similarly be applied to Figure 7.

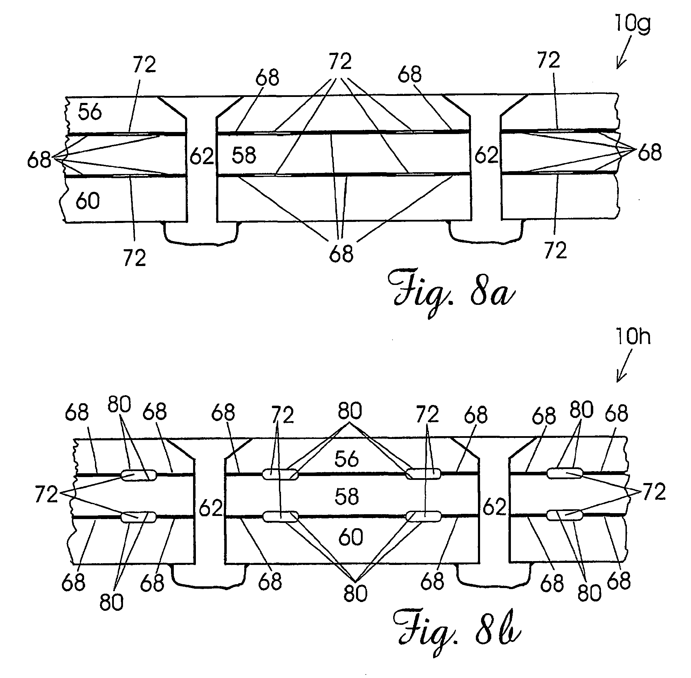

Figure 8a depicts a further embodiment of the invention. This embodiment is applied to a structure 10g comprised of three sheets 56, 58 and 60 formed as a sandwich construction coupled together by rivets 62. As explained in relation to the embodiment depicted in Figure 4a, it is common for such structures to incorporate a layer of sealant material 68 between adjacent sheets. The layer 68 is typically provided to prevent corrosion and fretting of the sheets 56, 58, 60 about the rivets 62. In the present embodiment, the step of providing cavities 72 within the structure 10g involves removing sections of the sealant 68 between adjacent pairs of sheets. However areas of sealant 68 are maintained about the rivets 62 to maintain the function of minimizing fretting of the sheets 56, 58, and 60, and also to form boundary seals for the cavities 72. The removed sealant 68 produces the sealed cavities 72 which can be placed in fluid communication with a pressure source. Indeed alternate cavities 72 can be placed in fluid communication with the atmosphere and with the source as described above in relation to the embodiments depicted in Figures 6 and 7. The removal of the sealant 68 to produce the cavities 72 is ideally achieved during the construction of the structure 10g by placing masks on the sheets 56, 58 and 60 to prevent the depositing of sealant 68 in selected regions. After the sealant layer 68 has been applied and the masks removed, the structure 10g is pulled together by fastening with rivets 62.

Figure 8b depicts a structure 10h which differs from that depicted in Figure 8a by the inclusion of recesses or depressions 80 deliberately formed in the surface of the sheets 56, 58 and 60 in the regions where the sealant 68 is removed. This provides larger, more definite cavities 72. The recesses or depressions 80 can be formed by any known means including but not limited to, chemical milling. The cavities 72 can be placed in fluid communication with a constant pressure source by conduits typical of 22c to 22x in the manner described herein above in relation to Figures 4a-7. Of course in a further variation alternate cavities 72 can be placed in communication with the source 20 (CP) and the ambient pressure F^{A}.

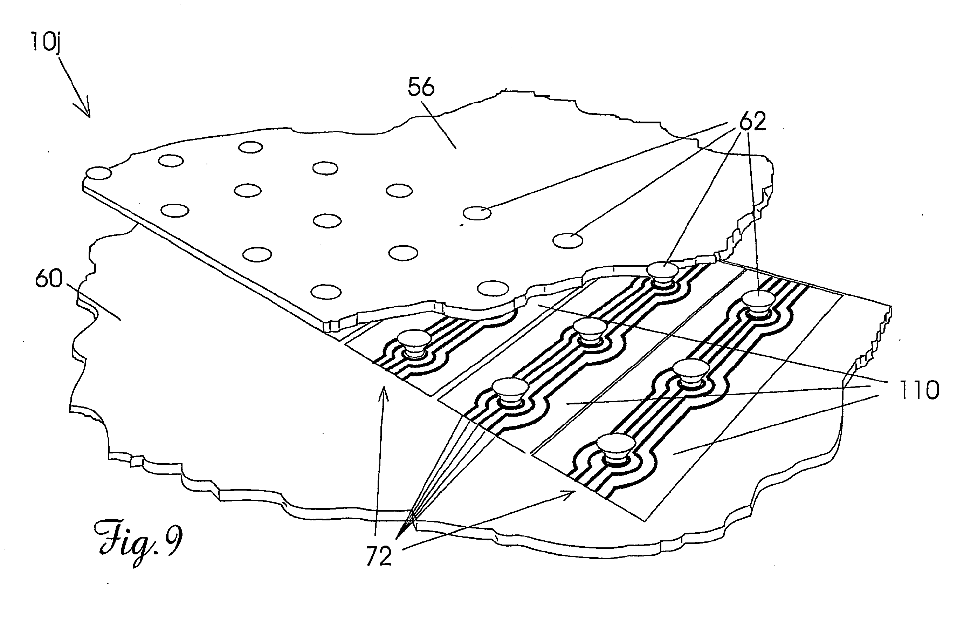

Figure 9 shows a partly sectioned oblique view of a further structure in the form of lap splice 10j in which pre-formed elastomeric, self adhesive, film pads 110 are sandwiched between sheets 56 and 60 which are fastened together by rivets 62. The pads 110 comprise shapes cut and assembled so as to define multiple cavities 72 when sandwiched between the plates 56 and 60. For drawing convenience, the cavities 72 as shown as thick lines. By interspersing the connections of the cavities 72 with both atmospheric pressure reference and with cabin pressure interconnected to the monitoring apparatus typical of 26c to 26e of previous examples, cracks that may transit a sheet surface 56 or 60, before breaking through the either sheet, may be detected early. This is important because of the zipper effect of rapid failure in aircraft fuselages that have occurred in the past as cracks were not readily visible. By reversing the cabin pressure/ambient pressure relationship sequentially, to the three cavities shown either side of each rivet 62, confirmation of the growth of a crack, by recording a second interception can be achieved to aid the elimination of false positives. For additional reference, the examiner is directed to the specification International Application No PCT/AU94/00325 (WO 94/27130) which shows disclosure of crack detection.

Now that the embodiments of the present invention have been described in detail it will be apparent to those skilled in the relevant arts that numerous modifications and variations may be made without departing from the broad inventive concepts. For example, a moisture trap can be provided between the source 20 and impedance 28, when the source 20 is a gas source to dry the gas prior to flowing into the structure 10. Additionally, the source 20 can be a source of an inert gas. Further, anti corrosion agents can be induced into the defined cavities. When the structure 10 is a composite material having a plurality of internal cavities that are sealed from each other, embodiments of the invention include forming communication paths in the composite material between the internal cavities.

All such modifications and variations are deemed to be within the scope of the present invention the nature of which is to be determined from the above description and the appended claims.

## Claims

1. A method of monitoring the integrity of a permeable structure (10, 10a, 10b, 10c, 10d, 10e, 10f, 10g, 10h, 10i, 10j) disposed in an environment containing a fluid (F) at an ambient pressure, and where at least one cavity (14, 50, 72) is provided on or in the structure,;
wherein a source (20) of a first fluid at a first pressure greater than said ambient pressure in fluid communication with the at least one cavity (14,50, 72);
**characterized by** connecting a high fluid flow impedance (28) in series between said at least one cavity (14, 50, 72) is provided and said source to provide a minuscule inflow of fluid to said at least one cavity and through and from the permeable structure;
allowing the minuscule inflow to reach a steady state rate: and
monitoring for a change in the steady state rate of said minuscule inflow of said first fluid into said at least one cavity.

2. The method according to claim 1 wherein, said first fluid source pressure is substantially constant with respect to said ambient pressure.

3. The method according to claim 1 or 2 wherein, said monitoring comprises monitoring for a change in steady state differential pressure between said at least one cavity (14, 50, 72) and said source (20),

4. The method according to any one of claims 1 to 3 wherein, said step of providing said first fluid source (20) at said first pressure comprises setting said first pressure at a level which is sufficiently greater than said ambient pressure to overcome hygroscopic force and capillary action, but not sufficient to be detrimental to the integrity of said structure (10).

5. The method according to any one of claims 1 to 4 wherein, providing said source (20) of first fluid comprises providing a source of a first gas.

6. The method according to claim 5 wherein, providing said first gas comprises providing a moisture trap between said source and said at least one cavity to dry said gas prior to flowing into said at least one cavity.

7. The method according to any one of claims 1 to 6 wherein, when said structure (10) includes two or more internal cavities (14, 50, 72), said placing comprises one or both of (a) placing said cavities (14, 50, 72) in fluid communication with each other; and (b) placing said cavities in fluid communication with said source (20).

8. The method according to claim 1 or 2 wherein, said monitoring comprises:
providing a supply of a fluid marker in fluid communication with said source; and
monitoring said structure (10) for traces of said fluid marker.

9. The method according to claim 8 wherein, said fluid marker comprises a dye indicating liquid or gas.

10. The method according to claim 1 or 2 wherein, said step of monitoring for a change in steady state inflow rate comprises:
providing a supply of a detectable gas in fluid communication with said source;
providing a detecting means for said gas; and
monitoring for a change in a steady state rate of seepage of said gas from said structure.

11. An apparatus (18) for monitoring the integrity of a permeable structure (10) disposed in an environment containing a fluid (F) at an ambient pressure, and wherein at least one cavity (14, 50, 72) is provided on or in the structure, the apparatus comprising, a source (20) of a first fluid at a first pressure greater than said ambient pressure, and a communication channel (22) for providing fluid communication between said source (20) and said at least one cavity (14, 50, 72), **characterised in that** said channel (229 includes a high fluid flow impedance (28) connected in series between said at least one cavity (14, 50, 72) and said source (20) to provide a minuscule inflow of fluid to said at least one cavity (14,50, 72) and through the permeable structure to produce a steady state rate of inflow of the fluid into the at least one cavity (14, 50, 72); and,
monitoring means (26) are provided for monitoring for a change in the steady state rate of said minuscule inflow of said first fluid through said channel into said at least one cavity.

12. The apparatus (18) according to claim 11 wherein, said monitoring means (26) comprises a transducer (30) coupled across said high fluid flow impedance (28) for monitoring for a change in steady state differential pressure between said at least one cavity (14, 50, 72) and said source (20),

13. The apparatus (18) according to claim 11 or 12 wherein, said first pressure is sufficiently greater than said ambient pressure to overcome hygroscopic force and capillary action but not sufficient to be detrimental to the integrity of said structure (10).

14. The apparatus (18) according to an one of claims 11 to 13 wherein, said first fluid is a gas.

15. The apparatus (18) according to an one of claims 11 to 14 further comprising a moisture trap located between said source (20) and said at least one cavity (14, 50, 72) to dry said gas prior to flowing into said at least one cavity.

16. The apparatus (18) according to claim 11 wherein, said monitoring means comprises a fluid marker in communication with said source (20) for marking said structure at locations where said fluid permeates from said cavity through said structure (10) to said environment.

## Patentansprüche

1. Verfahren zum Überwachen der Integrität einer permeablen Struktur (10, 10a, 10b, 10c, 10d, 10e, 10f, 10g, 10h, 10i, 10j), die sich in einem ein Fluid (F) bei einem Umgebungsdruck enthaltenden Umfeld befindet, wobei zumindest ein Hohlraum (14, 50, 72) auf oder in der Struktur vorhanden ist;
wobei eine Quelle (20) eines ersten Fluids bei einem ersten Druck, der größer als der Umgebungsdruck ist, in Fluidverbindung mit dem zumindest einen Hohlraum (14, 50, 72) ist;
**gekennzeichnet durch** Vorsehen einer hohen Fluidströmungsimpedanz (28) in Reihe zwischen dem zumindest einen Hohlraum (14, 50, 72) und der Quelle, um eine sehr kleine Einströmung von Fluid in den zumindest einen Hohlraum und **durch** und aus der permeablen Struktur zu erhalten;
Ermöglichen, dass die sehr kleine Einströmung eine gleichbleibende Rate erreicht; und
Überwachen auf eine Änderung der gleichbleibenden Rate der sehr kleinen Einströmung des ersten Fluids in den zumindest einen Hohlraum.

2. Verfahren nach Anspruch 1, bei dem der Druck der Quelle des ersten Fluids im Wesentlichen konstant mit Bezug auf den Umgebungsdruck ist.

3. Verfahren nach Anspruch 1 oder 2, bei dem das Überwachen das Überwachen auf eine Änderung des gleichbleibenden Differenzdrucks zwischen dem zumindest einen Hohlraum (14, 50, 72) und der Quelle (20) aufweist.

4. Verfahren nach einem der Ansprüche 1 bis 3, bei dem der Schritt des Vorsehens der Quelle (20) für das erste Fluid bei dem ersten Druck das Einstellen des ersten Drucks auf einen Pegel, der ausreichend höher als der Umgebungsdruck ist, aufweist, um eine hygroskopische Kraft und die Kapillarwirkung zu überwinden, aber nicht ausreichend, um schädlich für die Integrität der Struktur (10) zu sein.

5. Verfahren nach einem der Ansprüche 1 bis 4, bei dem das Vorsehen der Quelle (20) für das erste Fluid das Vorsehen einer Quelle für ein erstes Gas aufweist.

6. Verfahren nach Anspruch 5, bei dem das Vorsehen des ersten Gases das Vorsehen einer Feuchtigkeitsfalle zwischen der Quelle und dem zumindest einen Hohlraum aufweist, um das Gas zu trocknen, bevor es in den zumindest einen Hohlraum strömt.

7. Verfahren nach einem der Ansprüche 1 bis 6, bei dem, wenn die Struktur (10) zwei oder mehr innere Hohlräume (14, 50, 72) enthält, das Anordnen (a) das Anordnen der Hohlräume (14, 50, 72) in Fluidverbindung miteinander und/oder (b) das Anordnen der Hohlräume in Fluidverbindung mit der Quelle (20) aufweist.

8. Verfahren nach Anspruch 1 oder 2, bei dem das Überwachen aufweist:
Vorsehen einer Zuführung eines Fluidmarkierungsmittels in Fluidverbindung mit der Quelle; und
Überwachen der Struktur (10) auf Spuren des Fluidmarkierungsmittels.

9. Verfahren nach Anspruch 8, bei dem das Fluidmarkierungsmittel einen Flüssigkeit oder Gas anzeigenden Farbstoff aufweist.

10. Verfahren nach Anspruch 1 oder 2, bei dem der Schritt des Überwachens auf eine Änderung der gleichbleibenden Einströmungsrate aufweist:
Vorsehen einer Zuführung eines erfassbaren Gases in Fluidverbindung mit der Quelle;
Vorsehen einer Detektorvorrichtung für das Gas; und
Überwachen auf eine Änderung der gleichbleibenden Rate des Entweichens des Gases aus der Struktur.

11. Vorrichtung (18) zum Überwachen der Integrität einer permeablen Struktur (10), die in einem ein Fluid (F) bei einem Umgebungsdruck enthaltenden Umfeld angeordnet ist, wobei zumindest ein Hohlraum (14, 50, 72) auf oder in der Struktur vorgesehen ist, welche Vorrichtung aufweist: eine Quelle (20) für ein erstes Fluid bei einem ersten Druck, der größer als der Umgebungsdruck ist, und einen Verbindungskanal (22) zum Vorsehen einer Fluidverbindung zwischen der Quelle (20) und dem zumindest einen Hohlraum (14, 50, 72), **dadurch gekennzeichnet, dass** der Kanal (22) eine hohe Fluidströmungsimpedanz (28) enthält, die in Reihe zwischen den zumindest einen Hohlraum (14, 50, 72) und die Quelle (20) geschaltet ist, um eine sehr kleine Einströmung von Fluid in den zumindest einen Hohlraum (14, 50, 72) und durch die permeable Struktur vorzusehen, um eine gleichbleibende Rate der Einströmung des Fluids in den zumindest einen Hohlraum (14, 50, 72) zu erzeugen; und
Überwachungsmittel (26) vorgesehen sind zum Überwachen auf eine Änderung der gleichbleibenden Rate der sehr kleinen Einströmung des ersten Fluids durch den Kanal in den zumindest einen Hohlraum.

12. Vorrichtung (18) nach Anspruch 11, bei der die Überwachungsmittel (26) einen Wandler (30) aufweisen, der über die hohe Fluidströmungsimpedanz (28) gekoppelt ist, um auf eine Änderung des gleichbleibenden Differenzdrucks zwischen dem zumindest einen Hohlraum (14, 50, 72) und der Quelle (20) zu überwachen.

13. Vorrichtung (18) nach Anspruch 11 oder 12, bei der der erste Druck ausreichend größer als der Umgebungsdruck ist, um eine hygroskopische Kraft und eine Kapillarwirkung zu überwinden, aber nicht ausreichend, um für die Integrität der Struktur (10) schädlich zu sein.

14. Vorrichtung (18) nach einem der Ansprüche 11 bis 13, bei der das erste Fluid ein Gas ist.

15. Vorrichtung (18) nach einem der Ansprüche 11 bis 14, weiterhin aufweisend eine Feuchtigkeitsfalle, die sich zwischen der Quelle (20) und dem zumindest einen Hohlraum (14, 50, 72) befindet, um das Gas vor dem Einströmen in den zumindest einen Hohlraum zu trocknen.

16. Vorrichtung (18) nach Anspruch 11, bei der die Überwachungsmittel ein Fluidmarkierungsmittel in Verbindung mit der Quelle (20) aufweisen, um die Struktur an Stellen, an denen das Fluid aus dem Hohlraum durch die Struktur (10) in die Umgebung entweicht, zu markieren.

## Revendications

1. Procédé de surveillance de l'intégrité d'une structure perméable (10, 10a, 10b, 10c, 10d, 10e, 10f, 10g, 10h, 10i, 10j) disposée dans un environnement contenant un fluide (F) à une pression ambiante, et où au moins une cavité (14, 50, 72) est prévue sur ou dans la structure ;
dans lequel une source (20) d'un premier fluide à une première pression supérieure à ladite pression ambiante est en communication fluidique avec la au moins une cavité (14, 50, 72) ;
**caractérisé par** le fait de raccorder en série une haute impédance d'écoulement de fluide (28) entre ladite au moins une cavité (14, 50, 72) prévue et ladite source pour fournir un minuscule écoulement d'entrée de fluide à ladite au moins une cavité et à travers la structure perméable et à partir de celle-ci ;
permettre au minuscule écoulement d'entrée d'atteindre un débit de régime permanent ; et
surveiller un changement dans le débit de régime permanent dudit minuscule écoulement d'entrée dudit premier fluide dans ladite au moins une cavité.

2. Procédé selon la revendication 1, dans lequel ladite première pression de source de fluide est sensiblement constante par rapport à ladite pression ambiante.

3. Procédé selon la revendication 1 ou 2, dans lequel ladite surveillance comprend la surveillance d'un changement de pression différentielle en régime permanent entre ladite au moins une cavité (14, 50, 72) et ladite source (20).

4. Procédé selon l'une quelconque des revendications 1 à 3, dans lequel ladite étape de fourniture de ladite source de premier fluide (20) à ladite première pression comprend le réglage de ladite première pression à un niveau qui est suffisamment plus élevé que ladite pression ambiante pour surmonter la force hygroscopique et l'action capillaire, mais non suffisant pour être préjudiciable à l'intégrité de ladite structure (10).

5. Procédé selon l'une quelconque des revendications 1 à 4, dans lequel la fourniture de ladite source (20) de premier fluide comprend la fourniture d'une source d'un premier gaz.

6. Procédé selon la revendication 5, dans lequel la fourniture dudit premier gaz comprend la fourniture d'un piège à humidité entre ladite source et ladite au moins une cavité pour sécher ledit gaz avant écoulement dans ladite au moins une cavité.

7. Procédé selon l'une quelconque des revendications 1 à 6, dans lequel lorsque ladite structure (10) inclut deux ou plus de deux cavités internes (14, 50, 72), ledit placement comprend une ou deux actions parmi (a) placer lesdites cavités (14, 50, 72) en communication fluidique l'une avec l'autre ; et (b) placer lesdites cavités en communication fluidique avec ladite source (20).

8. Procédé selon la revendication 1 ou 2, dans lequel ladite surveillance comprend :
la fourniture d'une alimentation en marqueur de fluide en communication fluidique avec ladite source ; et
la surveillance de traces dudit marqueur de fluide dans ladite structure (10).

9. Procédé selon la revendication 8, dans lequel ledit marqueur de fluide comprend un colorant indiquant un liquide ou un gaz.

10. Procédé selon la revendication 1 ou 2, dans lequel ladite étape de surveillance d'un changement de débit d'écoulement d'entrée en régime permanent comprend :
la fourniture d'une alimentation en gaz détectable en communication fluidique avec ladite source ;
la fourniture de moyens de détection pour ledit gaz ; et
la surveillance d'un changement de débit de fuite dudit gaz en régime permanent à partir de ladite structure.

11. Appareil (18) pour surveiller l'intégrité d'une structure perméable (10) disposée dans un environnement contenant un fluide (F) à une pression ambiante, et dans lequel au moins une cavité (14, 50, 72) est prévue sur ou dans la structure, l'appareil comprenant une source (20) d'un premier fluide à une première pression supérieure à ladite pression ambiante, et un canal de communication (22) pour assurer une communication fluidique entre ladite source (20) et ladite au moins une cavité (14, 50, 72), **caractérisé en ce que** ledit canal (229) inclut une haute impédance d'écoulement de fluide (28) raccordée en série entre ladite au moins une cavité (14, 50, 72) et ladite source (20) pour fournir un minuscule écoulement d'entrée de fluide à ladite au moins une cavité (14, 50, 72) et à travers la structure perméable pour produire un débit de régime permanent d'écoulement d'entrée du fluide dans la au moins une cavité (14, 50, 72) ; et,
des moyens de surveillance (26) sont prévus pour surveiller un changement dans le débit de régime permanent dudit minuscule écoulement d'entrée dudit premier fluide à travers ledit canal dans ladite au moins une cavité.

12. Appareil (18) selon la revendication 11, dans lequel lesdits moyens de surveillance (26) comprennent un transducteur (30) couplé à travers ladite haute impédance d'écoulement de fluide (28) pour surveiller un changement de pression différentielle en régime permanent entre ladite au moins une cavité (14, 50, 72) et ladite source (20).

13. Appareil (18) selon la revendication 11 ou 12, dans lequel ladite première pression est suffisamment plus élevée que ladite pression ambiante pour surmonter la force hygroscopique ou l'action capillaire, mais non suffisante pour être préjudiciable à l'intégrité de ladite structure (10).

14. Appareil (18) selon l'une des revendications 11 à 13, dans lequel ledit premier fluide est un gaz.

15. Appareil (18) selon l'une des revendications 11 à 14, comprenant en outre un piège à humidité situé entre ladite source (20) et ladite au moins une cavité (14, 50, 72) pour sécher ledit gaz avant écoulement dans ladite au moins une cavité.

16. Appareil (18) selon la revendication 11, dans lequel lesdits moyens de surveillance comprennent un marqueur de fluide en communication avec ladite source (20) pour marquer ladite structure à des emplacements où ledit fluide s'infiltre dans ledit environnement à partir de ladite cavité, à travers ladite structure (10).
